# EUROPÄISCHE PATENTSCHRIFT

(11) **EP 2 261 625 B1**
(45) Veröffentlichungstag und Bekanntmachung des Hinweises auf die Patenterteilung: **20.09.2017**
(21) Anmeldenummer: 10405031.5
(22) Anmeldetag: 18.02.2010
(51) Int. Cl.: G01L 1/02, G01L 25/00, G01G 5/06, G01G 19/414, G01G 23/01

(54) **Methode zum Tarieren einer Vorrichtung mit einem mit Flüssigkeit druckbeaufschlagten und an einem Drucksensor angeschlossenen fexiblen Schlauch**
Method for taring a device with a flexible hose pre-tensioned with liquid and attached to a pressure sensor
Méthode de tarage d'un dispositif équipé d'un tuyau flexible prétendu avec du liquide et raccordé sur un capteur de pression

(30) Priorität: 10.06.2009 CH 891092009
(43) Veröffentlichungstag der Anmeldung: 15.12.2010
(73) Patentinhaber: Aphrodite Pat. Development LLC, New York 10983 (US)
(72) Erfinder: Gilardi Piero Enrico, 27038 Robbio(PV) (CH)
(74) Vertreter: Biazzi, Riccardo

(56) Entgegenhaltungen:
- WO-A2-99/26084
- US-A- 6 138 067

## Beschreibung

Die vorliegende Erfindung betrifft eine Methode zum Tarieren bzw. Nacheichen einer Vorrichtung mit einem flexiblen Schlauch, der mit Flüssigkeit gefüllt und vorgängig druckbeaufschlagt ist, und der an einem seiner Enden verschlossen und an seinem anderen Ende an einen Drucksensor angeschlossen ist, wie dies im Oberbegriff des Anspruchs 1 vorgesehen ist.

Die Anwendung solcher flexibler Schläuche ist in der Patentliteratur bekannt geworden durch die folgenden Dokumente, die den für die vorliegende Erfindung massgebenden Stand der Technik darstellen: EP-12216911, EP-1621442 sowie durch die am 14. 06. 2007 eingereichte schweizerische Patentanmeldung Nr. 00952/07.

Eine solche Anwendung ist insbesondere in Kombination mit der Lenkvorrichtung von Selbstbeweger-Fahrzeugen vorgesehen (Steuerrad eines Automobils, Lenkstange eines Motorrades, usw.) oder auch als im Sitz eines Fahrzeugs eingebauter Sensor. Im erstgenannten Fall geht es hauptsächlich darum, auf die instinktive Reaktion des Lenkers auf das Auftauchen einer Stress-Situation, wie das unerwartete Erscheinen eines Hindernisses auf dem Fahrweg, das eine sofortige Bremsaktion erfordert, und/oder auf ein optisches oder akustisches Signal zu reagieren. Zu diesem Zweck wird beispielsweise das instinktive packende Zugreifen auf das Steuerrad oder die Lenkstange, das der Lenker unter Schockwirkung innert kürzester Zeit ausführt, ohne jedoch die im Zentrum des Steuerrades angebrachte akustische Warnanlage auszulösen, die nicht nur langsam zu erreichen ist, sondern auch Verletzungen der Hand verursachen kann, falls der Airbag anspricht. Im zweiten genannten Fall geht es darum, die Anwesenheit einer Person auf dem Sitz eines Automobils in zuverlässiger Weise festzustellen und auch deren Körpergewicht (Kinder, Erwachsene, usw.) festzustellen, um im Fall eines Zusammenstosses das Ansprechen des dem Sitz zugeordneten Airbags zu steuern und die Intensität des Aufblasens zu regulieren, um auf solche Weise einerseits unnötiges Ansprechen des Airbags zu vermeiden und anderseits die Körperschäden zu begrenzen, welche das Ansprechen des Airbags hervorrufen kann, auch wenn er oftmals das Leben der verunglückten Person retten kann. Statistisch ist nämlich nachgewiesen, dass der Airbag, der sich unterschiedslos aufbläht, (man denke an Kinder oder an Brillenträger) schwere Verletzungen verursachen kann. Daher ist es wichtig, dass ein solches Ereignis vorteilhaft gesteuert werden kann, so selten es auch auftrete.

Die praktische Erfahrung hat aufgezeigt, dass die Anwendung der flüssigkeitsgefüllten Schläuche, die an einen Drucksensor angeschlossen sind, um die obengenannten Zwecke zu erfüllen, und die aus den genannten Dokumenten bekannt sind, gewiss die Realisierung von Lenk-Einrichtungen erlaubt, die zuverlässig und kostengünstig sind, jedoch noch einen nicht vernachlässigbaren Nachteil aufweist, nämlich der Abhängigkeit von äusseren Bedingungen unter denen die Einrichtung funktionieren soll. Dabei geht es insbesondere um die klimatischen Bedingungen (Temperaturen, Luftdruck) unter denen das Fahrzeug betrieben wird, die den anfänglichen Innendruck des flüssigkeitsgefüllten Schlauches beeinflussen können, aufgrund dessen die Differenz zum Druck, den die Person von aussen infolge der Reaktion der Hände des Lenkers auf die Lenkverrichtung hervorruft, oder den das Gewicht der auf dem Sitz sitzenden Person verursacht. Ändern sich die äusseren Bedingungen von Temperatur und Druck, so können sich die genannten anfänglichen Grund-Druckwerte verändern, und daher können die Druckdifferenzen nicht mehr bestimmt werden, über welchen die Einrichtungen ausgelöst werden, die auf das Anpacken des Steuerrades oder des Gewichtes im Fall des Auto-Sitzes reagieren. Man ist also mit einem Messfehler konfrontiert, der gelegentlich beträchtliche Werte annehmen kann. Zu denken ist dabei beispielsweise an den Einfluss der Erwärmung auf die elastischen Eigenschaften des flexiblen Schlauches oder an die Abnahme des Luftdruckes im Hochgebirge (entsprechend der barometrischen Höhengleichung). Weitere Beispiele von derartigen, im Stand der Technik bekannten, Methoden sind in jedem von US6138067 und WO99/26084 beschrieben.

Zweck der vorliegenden Erfindung ist daher, diese Unsicherheit zu beheben und deshalb eine Methode zur Tarierung bzw. Nacheichung der Vorrichtung mit einem flexiblen Schlauch vorzuschlagen, die wirksame Unterdrückung des Einflusses von Veränderungen eines oder mehrerer Umweltfaktoren auf den Betrieb der Vorrichtung erlaubt.

Diese Zielsetzung wird gemäss der Erfindung erfüllt durch eine Methode zum Tarieren bzw. Nacheichen einer Vorrichtung mit einem vorgängig druckbeaufschlagten flüssigkeitsgefüllten flexiblen Schlauch gemäss der Beschreibung im Oberbegriff des Anspruchs 1, welche die im charakterisierenden Teil des Anspruchs 1 festgelegten Eigenschaften aufweist..

Die Grundidee der vorliegende Erfindung besteht darin, bei der Ermittlung des von aussen von einer Person auf den Schlauch ausgeübten Druckes gegenüber dem im vorgängig druckbeaufschlagten Schlauch vorliegenden Druck den Veränderungen des Innendrucks infolge von Veränderungen eines oder mehrerer Umweltfaktoren gebührend Rechnung zu tragen. Solche variablen Umweltfaktoren können beispielsweise der Umgebungs-Luftdruck oder die Umgebungstemperatur sein, beides Faktoren, welche bei Veränderungen eine Veränderung des im druckbeaufschlagten Schlauch herrschenden Innendrucks hervorrufen, welcher der Referenzwert des Drucks ist, gegenüber welchem die von aussen auf den Schlauch ausgeübten Drücke bei der Ausübung der Funktionen beurteilt werden, für die die Vorrichtung konzipiert ist.

Bereits an dieser Stelle sei bemerkt, dass zwei Ausführungsformen der erfindungsgemässen Methode Gegenstand der Unteransprüche 2 und 3 sind. Erfindungsgemäss wird der flexible Schlauch mit einer Häufigkeit von äusserem Druck entlastet, deren Intervalle kürzer sind als der Zeitraum, in welchem Veränderungen der Bedingungen erfolgen, die massgebliche Veränderungen des anfänglichen Grundwertes (im folgenden auch Tarierungs- oder Referenz-Wert genannt) bestimmen. Dieser Fall ist, beispielsweise und typischerweise, jener der Anwendung des flüssigkeitsgefüllten flexiblen Schlauches in einer Lenkvorrichtung eines Fahrzeugs (Steuerrad oder Lenkstange): In diesem Fall wird der Schlauch häufig immer wieder entlastet, viel früher als sich wesentliche Veränderungen der Umweltfaktoren (Temperatur, Umgebungs-Luftdruck) bemerkbar machen können. Im anderen Fall, bei welchem der flexible Schlauch seltener vom Druck entlastet wird, wobei das Intervall zwischen einer Entlastung und der nächsten so lang ist, dass sich während dieser Zeit Veränderungen der Umweltbedingungen (Temperatur und Umgebungs-Luftdruck) auswirken, so dass sich der Grundwert (oder Tarierungswert) des Druckes im entlasteten Schlauch verändert.

Dies ist beispielsweise bei der Anwendung des flüssigkeitsgefüllten flexiblen Schlauchs der Fall, mittels welchem das Gewicht einer auf dem Sitz eines Automobils sitzenden Person festgestellt werden soll, welche an diesem Ort über längere Zeit sitzen bleibt, während welcher Zeit sich die Umweltbedingungen wesentlich verändern können.

Beide Fälle der Anwendung der erfindungsgemässen Lösung werden in der folgenden Beschreibung einiger Realisierungs-Beispiele der vorliegenden Erfindung im Einzelnen näher erklärt.

Beschrieben sei hier eine erste und interessante Anwendung der Vorrichtung mit einem flexiblen flüssigkeitsgefüllten und vorgängig druckbeaufschlagten Schlauch in Verbindung mit der Lenkvorrichtung (Steuerrad eines Automobils oder Lenkstange eines Motorrades, usw.), die den Zweck hat, auf die instinktive Reaktion des Lenkers in einer Gefahrensituation oder bei Panikreaktion unter entsprechendem Stress zu reagieren. In einem solchen Fall packt der

Lenker das Steuerrad oder die Lenkstange mehr oder weniger lange fest an, lockert hingegen den Griff hie und da mit geringster Kraft und lässt sogar - beispielsweise auf einem hindernisfreien Strassenstück den Griff ganz los. In diesem Fall wird der vorgängig druckbeaufschlagte flexible Schlauch von dem auf ihn von der Hand des Lenkers zusätzlich ausgeübten Druck entlastet, wobei die Intervalle zwischen solchen Entlastungen (von der Grössenordnung von Minuten eher als von Sekunden) ziemlich viel kürzer sind als der Zeitraum über welchen sich Veränderungen eines oder mehrerer Umweltfaktoren sich ausbilden können, wie wesentliche Veränderungen der Temperatur der Umgebungsluft oder des Luftdruckes. In diesem Falle ist beim Tarieren des im vorgängig druckbeaufschlagten Schlauch herrschenden Druckes also den im Zeitpunkt der Anwendung der Vorrichtung mit einem vorgängig druckbeaufschlagtem flexiblen Schlauch Rechnung zu tragen, und zu diesem Zweck wird in dieser speziellen Lösung als Tarierwert des entlasteten flexiblen vorgängig druckbeaufschlagten Schlauches herrschenden Druckes erfindungsgemäss der Mittelwert einer im Voraus festgelegten Zahl von minimalen Druckwerten angenommen, wobei dieser Mittelwert nach im Voraus festgelegten Zeitintervallen laufend angepasst wird, womit den Veränderungen der Umweltfaktoren automatisch Rechnung getragen wird.

Zur Realisierung der erfindungsgemässen Methode zum Tarieren muss ausser dem Sensor, der fortlaufend den im flexiblen druckbeaufschlagten Innendruck misst und im Oberbegriff des Anspruchs 1 vorgesehen ist, auch ein Informatik-Apparat mit geeigneter Software zum Berechnen des Mittelwertes des gemessenen Druckes im entlasteten druckbeaufschlagten Schlauches und zum Nachführen dieses Mittelwertes des Drucks nach vorbestimmtem Zeitintervall vorgesehen werden. Hierbei handelt es sich um normale Operationen, die jedem Informatik-Fachmann geläufig sind, so dass sich erübrigt, hier auf weitere Erklärungen einzugehen. Wichtig ist in diesem Beispiel der Anwendung der Erfindungsidee ist jedoch, dass das Tarieren bzw. Nacheichen der Vorrichtung mit einem flexiblem Schlauch hier nach jeweils kurzer Zeit erfolgt, damit dem Umstand gebührend Rechnung getragen wird, dass der Schlauch von dem äusseren Druck, den der Lenker bei normaler Fahrweise auf ihn ausübt, nach jeweils kürzerer Zeit entlastet wird, als wesentliche Veränderungen der äusseren Umweltfaktoren brauchen, um sich auszuwirken. Auch in diesem Fall wird solchen Veränderungen Rechnung getragen, damit die aus dem flexiblen vorgängig druckbeaufschlagten Schlauch bestehende Sicherheitsvorrichtung stets effizient funktionieren kann, da sie sich fortlaufend an die langfristigen Schwankungen der Umweltbedingungen anpasst. Und dank dem Umstand, dass als Referenzwert für die Tarierung fortlaufend der Mittelwert einer im Voraus festgelegten Zahl von minimalen Werten des Druckes im entlasteten gebildet wird, der fortlaufend nach im Voraus festgelegten Zeitintervallen) angepasst wird. Diese Art der Anwendung der Methode des Tarierens bzw. Nacheichens erlaubt erfindungsgemäss die Anwendung auch wenn der vom Lenker auf den flexiblen vorgängig druckbeaufschlagten Schlauch ausgeübte Druck ständig variiert, wie dies etwa im Fall eines Lenkers der Fall ist, der das Steuerrad mit einer oder beiden Händen hält oder fortlaufend die auf das Steuerrad oder die Lenkstange ausgeübte Griffkraft ändert. In diesen Fällen geht es darum, den im Fall von Panikreaktion des Lenkers ausgeübten Druck jederzeit korrekt einschätzen zu können, unabhängig von den mehr oder weniger langsamen Schwankungen der Umweltbedingungen. Dabei ist beispielsweise an den Fall eines infolge zu starker Sonnenexposition überhitzten Steuerrades zu denken. Das fortlaufende Tarieren bzw. Nacheichen des Grund-Druckwertes des entlasteten Schlauches kann somit den wirklichen Stress-Situationen des Lenkers unabhängig von den Umweltbedingungen vollständig Rechnung tragen, die berücksichtigt werden, da diese zu jedem Zeitpunkt den Druck in der Flüssigkeit bestimmen, die den entlasteten Schlauch ausfüllt.

Davon verschieden ist der zweite typische Fall der Anwendung des flexiblen vorgängig druckbeaufschlagten flüssigkeitgefüllten und mit einem Druck-Sensor versehenen Schlauches, bei welchem der flexible vorgängig druckbeaufschlagte Schlauch nur selten entlastet wird, und bei welchem die Vorrichtung vom Betriebsbeginn an korrekt funktionieren muss. Eine für diesen Fall typische Anwendung ist beispielsweise die Kontrolle, ob auf einem Sitz im Auto eine Person sitzt, und das Bestimmen ihres Gewichtes. Auch diese Anwendung des flexiblen Schlauches ist gemäss dem Stand der Technik bekannt, beispielsweise aus der unter dem Prioritätsdatum 23. 5. 2006 in der Schweiz eingereichten EP-A-0740149.3.

In einem solchen Fall ist erforderlich, dass das System auch bei abgestelltem Motor aktiviert ist, denn die Bestimmung des Gewichtes der Person muss vom Moment an funktionieren, in dem sich die Person auf dem Sitz niederlässt, damit die Sicherheits-Funktion (beispielsweise die Anpassung der Stärke der Aufblähung des Airbags an das Gewicht der sitzenden Person) in jeder Situation gewährleistet ist. Zu diesem Zweck sieht die erfindungsgemässe Methode vor, dass das Bestimmen des im flexiblen Schlauch herrschenden Druck-Grundwertes mittels eines zusätzlichen gebräuchlichen Ein/Aus-Schalters bewerkstelligt wird, was exakte Messung des Drucks erlaubt, der einen Moment bevor der Sensor aktiviert wird, im Schlauch herrscht, also einen Moment bevor sich die Person auf dem Sitz niederlässt. Dieser Druck-Grundwert bei leerem Sitz wird sodann mittels eines geeigneten Informatik-Apparates unter Berücksichtigung der Schwankungen der Umweltbedingungen Barometerdruck, Temperaturen) fortlaufend nachgeführt, wobei diese mittels geeigneter Druck- und Temperaturfühler fortlaufend gemessen werden. Da die Raumtemperatur (die in einem geschlossenen Autos an der Sonne bis auf 60° und mehr steigen kann) und der Luftdruck (von Meereshöhe bis beispielsweise 3000 Meter über Meer) beträchtlich variieren können und somit den Druck-Grundwert, der (bei leerem Sitz) im entlasteten flexiblen Schlauch herrscht, stark beeinflussen können, ist erforderlich, dass der Informatik-Steuerungsapparat sowohl bezüglich Temperatur als auch bezüglich Druck tariert bzw. nachgeeicht wird, was dadurch erreicht wird, dass in der Software des Informatiksystems die Diagramme des Drucks im Schlauch in Funktion der Umgebungstemperatur bzw. des Drucks im Schlauch in Funktion des Barometerdrucks eingebracht werden, die vorgängig experimentell ermittelt wurden. Der flüssigkeitsgefüllte flexible Schlauch wird so fortlaufend tariert bzw. nachgeeicht, unter Berücksichtigung der Schwankungen eines oder mehrerer Umweltfaktoren, wodurch zu jedem Zeitpunkt ein korrekter Gewichtswert der auf dem Autositz sitzenden Person ermittelt werden kann, unabhängig von den Umweltbedingungen, denen das Fahrzeug ausgesetzt ist.

Der erwähnte Ein-Aus-Schalter hat im wesentlichen nur die Funktion, das Vorhandensein einer Person auf dem Sitz festzustellen und kann daher schon bei geringen Gewichten (von wenigen Kilogrammen) schalten und somit dem Informatik-Apparat das Signal geben, dass von diesem Moment an der im entlasteten Schlauch herrschende Druck - Funktion der Temperatur und des Luftdrucks - als Grundwert oder Referenzwert für die Tarierung gilt, anhand dessen die Software des Informatikapparates sodann das genaue Gewicht der auf dem Sitz sitzenden Person berechnen kann, wie gross immer die Schwankungen der Umweltbedingungen sind (beispielsweise der Temperatur, die innert wenigen Minuten von 60° auf 20° ändern kann).

Der Vorteil der Methode zum Tarieren bzw. Nacheichen gemäss der vorliegenden Erfindung liegt darin, dass ein System der Messung des Drucks mittels eines mit Flüssigkeit vorgängig druckbeaufschlagten flexiblen Schlauches verwendet werden kann, das einfach, zuverlässig und kostengünstig ist, auch wo die äusseren Einflüsse die Genauigkeit und die Betriebssicherheit negativ beeinflussen könnten, was das System für einen breiteren Anwendungsbereich geeignet macht.

## Patentansprüche

1. Methode zum Tarieren bzw. Nacheichen einer Vorrichtung mit einem mit Flüssigkeit vorgängig druckbeaufschlagten flexiblen Schlauch, der an einem der Enden verschlossen ist und an seinem anderen Ende an einen Drucksensor angeschlossen ist, mittels welchem die Differenz des von einer Person von aussen her von auf den Schlauch ausgeübten Druck und dem im vorgängig druckbeaufschlagten Schlauch, dazu verwendet wird, im Voraus festgelegte Steuerungs-Funktionen auszulösen, wobei beim Ermitteln der Differenz zwischen dem von einer Person von aussen auf den Schlauch ausgeübten Druck und dem im vorgängig druckbeaufschlagten Schlauch herrschenden Druck die Schwankungen des im vorgängig druckbeaufschlagten Schlauch herrschenden Drucks ohne von aussen infolge eines oder mehrerer variabler äusserer Umweltfaktoren einwirkende Drücke berücksichtigt werden, **dadurch gekennzeichnet, dass** der vorgängig druckbeaufschlagte flexible Schlauch in einem Lenkrad eines Fahrzeugs eingebaut ist,
der vorgängig druckbeaufschlagte flexible Schlauch von dem auf ihn mit einer häufig in Intervallen ausgeübten Druck oft entlastet wird, wobei die Intervalle kürzer sind als die Zeitdauer, über welche sich die Schwankungen eines oder mehrerer Umweltfaktoren auswirken, und wo als Grundwert bzw. Referenzwert für die Tarierung bzw. Nacheichung des im entlasteten flexiblen vorgängig druckbeaufschlagten Schlauch herrschenden Druckes der Mittelwert einer im Voraus bestimmten Anzahl Minimalwerte gilt, und wo dieser Mittelwert in im Voraus festgelegten Zeitabständen fortlaufend nachgeführt wird.

2. Methode gemäss dem Anspruch 1,
**dadurch gekennzeichnet, dass**
einer der Umweltfaktoren die äussere Umgebungstemperatur ist.

3. Methode gemäss dem Anspruch 1,
**dadurch gekennzeichnet, dass**
einer der Umweltfaktoren der atmosphärische Luftdruck ist.

## Claims

1. A method for taring or recalibrating a device with a flexible tube, which was previously pressurized by a liquid, which is closed at one end and which is connected at its other end to a pressure sensor, by which the difference between the pressure exerted by a person from outside and the pressure prevailing in the previously pressurized tube is used to activate previously specified control functions,
wherein, when determining the difference between the pressure exerted on the tube by a person from outside and the pressure prevailing in the previously pressurized tube, the oscillations of the pressure prevailing in the previously pressurized tube are considered without pressures acting from outside, due to one or more variable external environmental factors, **characterized in that**
the previously pressurized flexible tube is mounted in the steering wheel of a vehicle,
the previously pressurized flexible tube is frequently relieved from pressure exerted thereon at frequent intervals, wherein the intervals are shorter than the time, during which the oscillations of one or more environmental factors have effect, and wherein as the base value or reference value for taring or recalibrating the pressure prevailing in the relieved previously pressurized flexible tube, the mean value of a predetermined number of minimum values is used, and wherein said mean value is tracked at predetermined time intervals.

2. The method of claim 1,
**characterized in that**
one of the environmental factors is the external ambient temperature.

3. The method of claim 1,
**characterized in that**
one of the environmental factors is the atmospheric pressure.

## Revendications

1. Méthode d'étalonnage ou de vérification de l'étalonnage d'un dispositif comprenant un tuyau flexible précédemment mis sous pression de liquide, tuyau qui est fermé à une des extrémités et qui est raccordé à son autre extrémité à un capteur de pression, au moyen duquel la différence entre la pression exercée de l'extérieur par une personne sur le tuyau flexible et le tuyau flexible précédemment mis sous pression est utilisée pour déclencher des fonctions de commande déterminées à l'avance,
sachant que, pour la détermination de la différence entre la pression exercée de l'extérieur par une personne sur le tuyau flexible et la pression régnant dans le tuyau flexible précédemment mis sous pression, on prend en compte les fluctuations de la pression régnant dans le tuyau flexible précédemment mis sous pression sans les pressions agissant de l'extérieur du fait d'un ou plusieurs facteurs environnementaux extérieurs variables,
**caractérisée en ce que**
le tuyau flexible précédemment mis sous pression est incorporé dans un volant de direction d'un véhicule,
la pression exercée sur le tuyau flexible précédemment mis sous pression est fréquemment relâchée, à intervalles, sachant que les intervalles sont plus courts que les durées pendant lesquelles agissent les fluctuations d'un ou plusieurs facteurs environnementaux, et sachant qu'on applique, comme valeur de base ou valeur de référence pour l'étalonnage ou la vérification de l'étalonnage de la pression régnant dans le tuyau flexible précédemment mis sous pression avec relâchement de la pression exercée, la valeur moyenne d'un nombre de valeurs minimales déterminé à l'avance, et sachant que cette valeur moyenne est continuellement réajustée, à des intervalles de temps déterminés à l'avance.

2. Méthode selon la revendication 1, **caractérisée en ce qu'**un des facteurs environnementaux est la température ambiante extérieure.

3. Méthode selon la revendication 1, **caractérisée en ce qu'**un des facteurs environnementaux est la pression atmosphérique de l'air.
